(19) **Europäisches Patentamt**
**European Patent Office**
**Office européen des brevets**

(11) **EP 1 985 440 A2**

(12) **EUROPEAN PATENT APPLICATION**

(43) Date of publication:
**29.10.2008 Bulletin 2008/44**

(51) Int Cl.:
**B32B 27/02** *(2006.01)* **B32B 27/32** *(2006.01)*
**B65B 53/00** *(2006.01)*

(21) Application number: **08154739.0**

(22) Date of filing: **17.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.04.2007 EP 07107037**

(71) Applicant: **Flexopack S.A. Plastics Industry 19400 Koropi (GR)**

(72) Inventor: **Gkinosatis, Dimitris Koropi Attica, 19400 (GR)**

(74) Representative: **Sandmann, Wolfgang et al Reinhard-Skuhra-Weise & Partner Patentanwälte Friedrichstrasse 31 80801 München (DE)**

(54) **Thermoforming films**

(57)  The present invention is directed to a thermoforming pack made of top and bottom web films and to a method of forming said pack.

EP 1 985 440 A2

## Description

The present invention refers to a deep draw thermoforming application for food packaging. Top and bottom webs (films) are specifically described as well as packs made therefrom.

Generally, the thermoforming packaging of food items by means of a heat shrinkable bag comprises the following steps

1. Heating a bottom web film with the help of positive or negative pressure in a mold, so that the bottom web is formed taking the approx. shape of the mold.

2. Placing the food inside the formed web.

3. Applying vacuum and heat sealing a top web on the bottom web, so that the pack is fully sealed.

4. In some cases, heat shrinking the whole pack for better, more appealing presentation.

In some cases, both top and bottom web undergo the forming station, so they are both deep drawn. The other steps are the same as the ones described above.

The films to be used for an application like this would require to have:

1. High oxygen barrier (low oxygen permeability) so that the food is fully protected by the detrimental oxidation actions which tend to spoil it.
2. Nice sealing properties, thus allowing the pack to be hermetically closed.
3. Good optical properties so that the presentation is appealing.
4. Thermoformability of the bottom film, meaning ability to deep draw smoothly and uniformly without holes and disruptions.
5. In the case of heat shrinking tunnel after the thermoforming, the films should be heat shrinkable.

Films according to the above application combine many desirable properties.

But the top and bottom webs used in the art are both biaxially oriented heat shrinkable film, even if the bottom web has small heat shrinkability. This means that the production of these films need a very special and expensive production process (biaxial orientation by double bubble or tenter frame method).

## SUMMARY OF THE INVENTION

Therefore, one problem underlying the present invention is the provision of thermoforming films which combine several desirable properties as low oxygen permeability, good sealing properties, good optical properties, thermoformability, and optionally heat-shrinkability, and, at the same time avoid the very complicated and expensive production involved in biaxially oriented films.

These problems are overcome by the subject-matter of the independent claims. Preferred embodiments are set forth in the dependent claims.

The inventors have managed to overcome the above mentioned problems by discovering a film combining

1. Excellent thermoformability
2. Excellent sealing properties over a big range of machine conditions.
3. Excellent optical properties
4. Manufacturing in a stable and controlled way.

This is achieved by a pack combining a heat shrinkable top web and a substantially non heat shrinkable bottom web.

For example, according to the present invention, the film which is deeply drawn (bottom web) is substantially non heat shrinkable at 100°C whereas the top web has a total heat shrinkability of at least 30 percent by immersing in water of 90°C.

Definitions:

In this application the following definitions are used:

The term " film" refers to a flat or tubular flexible structure of thermoplastic material.

The term "heat shrinkable" refers to a film that shrinks at least 10% in at least one of the longitudinal (MD) and transverse directions (TD) when heated at 90°C for 4 seconds. The shrinkability is measured in water according to ASTM 2732. For temperatures like 100°C or more, glycerine is used as a reference liquid.

The term "total heat shrinkability" refers to the sum of heat shrinkability at the MD direction and heat shrinkability at the TD direction. In all cases, ASTM 2732 is used for measurement of shrinkabilities.

The phrase "longitudinal direction" or "machine direction" herein abbreviated " MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit. The ones that have a density more than 0.940 g/cm$^3$ are called high density polyethylene (HDPE), the ones that are have less than 0.940 g/cm$^3$ are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" or EVA refer to copolymers of ethylene and vinyl acetate.

As used herein, the term EVOH refers to saponified products of ethylene vinyl ester copolymers. The ethylene content is typically in the range of 25 to 50%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized . An example of such material is Surlyn® from Dupont.

All measurement methods mentioned herein are readily available for the skilled person. For example, they can be obtained from the American National Standards Institute at: www.webstore.ansi.org

DETAILED DESCRIPTION OF THE INVENTION

According to a first aspect the present invention is directed to a pack comprising (or made of) a first, top heat shrinkable film having a total heat shrinkage of at least 10% measured according to ASTM 2732 in water at 90°C in at least one of MD, TD directions and a second, substantially non heat shrinkable film having a total heat shrinkability of less than 5% in glycerine at 100°C.
The first film preferably is forming the top web and the second film is forming the bottom web.
Under the majority of possible applications, the bottom web is heat drawn (thermoformed). But there is also possibility that both films are heat drawn-thermoformed. Top web is capable of being used also in these applications.
In a preferred embodiment, the top web comprises a high oxygen barrier material, such as EVOH, PVDC or polyamide.
In a further preferred embodiment, the top web comprises an outer layer of polyester or polyamide, most preferably polyester.
In a preferred version, the top web is of the structure

Outside layer comprising polyester
Adhesive layer
Adjacent layer comprising EVOH
Adhesive layer
Inner layer comprising ethylene alpha olefin copolymers or EVA

The adhesive layers may be maleic anhydrite modified LLDPE or EVA copolymer. Such polymers are well known in the art as trademarks ADMER® (Mitsui), BYNEL® (Dupont), MODIC® (Mitsubishi), PLEXAR® (Equistar) or others.
In one preferred version, the top and bottom webs film are irradiated. The irradiation may be a beam, gamma radiation, UV radiation or other.
In an embodiment, the bottom web comprises at least 30% of ionomer.
Preferably, the bottom web comprises EVOH, PVDC or polyamide as oxygen barrier layer. In another preferred embodiment, the bottom web comprises a sealing layer comprising EVA or homogeneous ethylene alpha olefin copolymer.
Between the sealing layer and the oxygen barrier layer, a tie layer could be used. Preferred materials for this tie layer may be ethylene ester copolymers, such as ethylene vinyl acetate copolymers, ethylene methyl acrylate copolymers and other materials well known in the art. A preferred version might include maleic anhydrite modified ethylene ester copolymers or maleic anhydrite modified LLDPE. Commercial trademarks are for example BYNEL® from Dupont and ADMER® from Mitsui.
The outer layer of the bottom web may comprise different materials like styrene polymers, polyamides, polyolefins or ionomers.
Between the outer and the barrier layer there may be another layer incorporating a tie layer. Preferred materials for this tie layer may be ethylene ester copolymers, such as ethylene vinyl acetate copolymers, ethylene methyl acrylate copolymers and other materials well known in the art. A preferred version might include maleic anhydrite modified ethylene ester copolymers or maleic anhydrite modified LLDPE. Commercial trademarks are for example BYNEL® from Dupont and ADMER® from Mitsui.
Any of the layers described above for both top and bottom webs may also include additives well known in the art such as slip agents, antiblock, polymer processing aids, antistatic, antifog, acid scavengers, odour scavengers and the like. A person skilled in the art may select the right additives according to any particular needs.
Also, different coatings could be used in both top and bottom webs to increase heat resistant or other properties. Nitrocellulose or polyamide based coatings are preferred.
In a second aspect, the present invention is diercted to a method of forming a pack as defined above comprising the steps of:

a. providing first and second films as defined above, and
b. sealing the first and second films to each other by a thermoforming process.

Preferably, the second film is a bottom web film, which is deep drawn and an article to be packaged is placed inside the formed web and the article is a food article.

The formed pack preferably is further subjected to heat-shrinkage and/or irradiated.

The present invention is now described by the following Examples:

EXAMPLES

A 5 layer film is produced in a double bubble method (the double bubble method is described among others in US 3,456,044) commercial line with the following recipe:

Inner (sealing layer)    32% P1+ 30% P2+ 20% E1+ 10% E2+ 8% ADDITIVES

The percentage is to be understood as rwt% unless otherwise indicated.

| | |
|---|---|
| Adjacent layer | 100% ADH 1 |
| Barrier layer | EVOH commercial grade having 44% ethylene per mol |
| Adjacent layer | 100% ADH2 |
| Outer layer | 100% PBT1 |

See table 1

The thickness of the structure is 22/13/4/9/7 starting from the inner and going to the outer layer.

The above film was irradiated under e-beam radiation, dose 4 MRADS.

TABLE 1

| Type | Description | Manufacturer | Melt Index g/10 min | Density g/cm$^3$ | Melting point ° C. |
|---|---|---|---|---|---|
| E1 | EVA | Dupont 3135 X | 0.35 | 0.93 | 95 |
| E2 | EVA | 1005 VN2 | 0.40 | 0.928 | 102 |
| AD1 | LLDPE mod. | ADMER 518 MITSUI | | | |
| P1 | Plastomer | Dow Affinity VP 8770 | 1.0 | 0.885 | 74 |
| PBT 1 | POLYBUTYLENE TEREPHTHALATE | DSM | | | |
| AD2 | EVA mod. | BYNEL 3861 | | | |
| P2 | PLASTOMER | DOW AFFINITY PL 1880 | 1 | 0.902 | 100 |
| ION1 | IONOMER | SURLYN 1601 DUPONT | | | |

EXAMPLE 2

A 7 layer film is produced in a hot blown film commercial line with the following recipe

| | |
|---|---|
| Inner(sealing layer) | 98% E2 + 2% antiblock additives |
| Adjacent layer | 100% ION 1 |

(continued)

| | |
|---|---|
| Adjacent layer | 100% AD1 |
| Barrier layer | EVOH commercial grade having 44% ethylene per mol |
| Adjacent layer | 100% ADH1 |
| Adjacent layer | 100% ION 1 |
| Outer layer | 100% ION1 |

See table 1

The thickness of the structure is **10/15/4/8/4/10/24** starting from the inner and going to the outer layer.
The film was e-beam radiated with 10 mrads.

**Tests:**

1. Haze measurement. The haze measurement was done according to ASTM D 1003.

2. Gloss measurement. This was done according to BS 2782.

3. Shrinkage measurement done according to ASTM 2732.

4. Sealing window.

Results of this testing is done

TABLE 2

| | HAZE | GLOSS | SHRINKAGE (MD/TD) |
|---|---|---|---|
| Material 1 (Ex. 1) | 8 | 1.05 | 30/30 at 90°C |
| Material 2 (Ex. 2) | 12 | 95 | 0/0 at 100°C |

Tests with the above top and bottom web has been done on a Multivac thermoforming machine type M855. The bottom web was deeply drawn and then the top web is only sealing to the bottom. After the sealing process, the pack was introduced in a water tank of 85°C and the packs were evaluated according to their appearance. For comparison reasons, the same tests were executed with the commercial type FMXB as top web and the innovative bottom web was used as formed web. Then the same tests were done with the innovative top and the material FMXB used as a bottom web.
Results were that the innovative top and bottom webs were much better than the other two approaches.
In the case of top web FMXB the material broke immediately after the heat sealing station. In case of FMXB used as bottom web, the forming of the film was not satisfactory. In case of the pack comprising the innovative top and bottom webs, the packs were satisfactory after shrinking and had secure seals, high gloss and appealing presentation.

**Claims**

**1.** A thermoforming pack comprising two films with the following characteristics:

    a. a first, heat shrinkable film with total heat shrinkability at least 10% at 90°C;
    b. a second, substantially non heat shrinkable film with a total heat shrinkability of less than 5% at 100°C.

**2.** The thermoforming pack of claim 1, where at least the second film is heat drawn during the thermoforming process.

**3.** The thermoforming pack of claim 1 or 2, wherein the first film is forming the top web and the second film is forming the bottom web.

4. The thermoforming pack of one or more of the preceding claims, wherein the top web comprises a high oxygen barrier material, preferably EVOH, PVDC or polyamide and/or wherein the top web comprises an outer layer of polyester or polyamide, preferably of polyester.

5. The thermoforming pack of one or more of the preceding claims, wherein the top web has the following structure:

> Outside layer comprising polyester
> Adhesive layer
> Adjacent layer comprising EVOH
> Adhesive layer
> Inner layer comprising ethylene alpha olefin copolymers or EVA

6. The thermoforming pack of one or more of the preceding claims, wherein the top and bottom web films are irradiated, preferably by beam, gamma radiation, or UV radiation.

7. The thermoforming pack of one or more of the preceding claims, wherein the second film or the bottom web comprises at least 30% of ionomer, and/or wherein the bottom web comprises EVOH, PVDC or polyamide as oxygen barrier layer and/or a sealing layer comprising EVA or homogeneous ethylene alpha olefin copolymer.

8. The thermoforming pack of claim 7, wherein between the sealing layer and the oxygen barrier layer, a tie layer is used, preferably comprising ethylene ester copolymers, such as ethylene vinyl acetate copolymers, or ethylene methyl acrylate copolymers, most preferably comprising maleic anhydrite modified ethylene ester copolymers or maleic anhydrite modified LLDPE.

9. The thermoforming pack of one or more of the preceding claims, wherein an outer layer of the bottom web comprises materials like styrene polymers, polyamides, polyolefins and/or ionomers.

10. The thermoforming pack of one or more of the preceding claims, wherein between the outer and the barrier layer another layer incorporating a tie layer is present, which tie layer preferably comprises ethylene ester copolymers, such as ethylene vinyl acetate copolymers, and/or ethylene methyl acrylate copolymers, and more preferably comprises maleic anhydrite modified ethylene ester copolymers or maleic anhydrite modified LLDPE.

11. The thermoforming pack of one or more of the preceding claims, wherein the films further include additives such as slip agents, antiblock agents, polymer processing aids, antistatic agents, antifog agents, acid scavengers, and/or odour scavengers.

12. The thermoforming pack of one or more of the preceding claims, wherein coatings are used in both top and bottom webs, preferably nitrocellulose and/or polyamide based coatings.

13. A method of forming a pack of one or more of claims 1-12 comprising the steps of:

> a. providing first and second films as defined in claims 1-12, and
> b. sealing the first and second films to each other by a thermoforming process.

14. The method of claim 13, wherein the second film is a bottom web film, which is deep drawn and an article to be packaged is placed inside the formed web, and/or wherein the article is a food article.

15. The method of one or more of claims 13 or 14, wherein the formed pack is further subjected to heat-shrinkage and/or irradiated.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 3456044 A